# EUROPÄISCHE PATENTSCHRIFT

(11) **EP 0 450 484 B1**
(45) Veröffentlichungstag und Bekanntmachung des Hinweises auf die Patenterteilung: **21.12.1994**
(21) Anmeldenummer: 91104860.1
(22) Anmeldetag: 27.03.1991
(51) Int. Cl.: B01D 29/15, B01D 29/54

(54) **Kerzenfilterelement**
Candle filter element
Elément filtrant à bougie

(30) Priorität: 02.04.1990 CH 1092/90
(43) Veröffentlichungstag der Anmeldung: 09.10.1991
(73) Patentinhaber: DRM, DR. MÜLLER AG, CH-8708 Männedorf ZH (CH); BAYER AG, 51368 Leverkusen (DE)
(72) Erfinder: Gay, Wolfgang, W-5068 Odenthal (DE); Birkenstock, Udo, Dr., W-4030 Ratingen 8 (DE); Höhle, Glenn, CH-8707 Uetikon a.S. (CH)
(74) Vertreter: Geyer, Ulrich F., Dr. Dipl.-Phys.

(56) Entgegenhaltungen:
- DE-A- 3 637 325
- FR-A- 1 103 138
- US-A- 4 118 323

## Beschreibung

Die Erfindung betrifft ein Kerzenfilterelement zur Filtration eines Restvolumens von Suspensionen mit rasch sedimentierenden Feststoffen und zum Einbau in einen Behälter.

In der EP-A-O 066 921 ist ein Kerzenfilterelement der Art eines Einkammersystems beschrieben. Solche Filterelemente, welche in einem Druckbehälter in der Regel hängend eingebaut sind, sind zur Restvolumenfiltration nur bedingt geeignet.

In der CH-A-658 401 sind die bekannten Filterelemente in einem Druckbehälter angeordnet. Zur Restvolumenfiltration kommt ein zentral angeordnetes Filterelement zur Anwendung, das bis zum tiefsten Punkt des konischen Filterbehälters reicht. Das Filterelement ist mit einem glockenförmigen Mantel umgeben. Das unfiltrierte Restvolumen vom Boden des Filterbehälters wird durch Gasdruck im Filterbehälter in den Raum zwischen Mantel und Filtermittel der dafür vorgesehenen Filterkerze gedrückt und auf diese Weise weitgehend ausfiltriert. Ein verbleibendes Restvolumen kommt trotzdem zustande, da das Druckgas, z.B. Luft oder ein inertes Gas, durch die Filterkerzen ab einer bestimmten Mindestbedeckung mit Flüssigkeit durchschlägt und dadurch die Filtration unterbricht.

Alle bekannten Verfahren mit Kerzenfilterelementen haben Nachteile, vor allem dann, wenn Suspensionen mit hohem Feststoffgehalt filtriert werden sollen. Aber auch bei der Filtration von Feststoffen, die empfindlich gegen Zerkleinerung sind, grobe Körnung haben oder ein hohes spezifisches Gewicht aufweisen, treten Probleme auf.

Es wurde auch versucht, das Restvolumen während einer längeren Zirkulation mittels Pumpen im Behälter zu versprühen. Hier - durch werden die suspendierenden Teilchen zermahlen und somit mechanisch geschädigt. Als ein zusätzlicher Nachteil kann die Verstopfung der Sprühdüsen angesehen werden. Bei dem bekannten Filterkerzenelement mit dem Glockenmantel sind eine Waschung des Filterkuchens und ein nachfolgender Austrag des eingeschlossenen Filterkuchens erschwert.

Es ist weiter bekannt, dass der Feststoff der zu filtrierenden Suspension mit begrenzter Dicke auf den Filterkerzenelementen aufliegen muss. Je nach der Menge des abzutrennenden Feststoffes sind demzufolge oft sehr grosse Filterflächen erforderlich. Der abgetrennte Filterkuchen wird dann einer weiteren Nachbehandlung, wie Waschen und/ oder Trocknen, unterworfen. Hierzu ist es erforderlich, dass keine Risse im Filterkuchen auftreten, wodurch die Massnahmen der Nachbehandlung unvollständig werden.

Aufgabe der Erfindung ist es, ein Filterelement zur Verfügung zu stellen, welches das Restvolumen von Suspensionen mit rasch sedimentierenden Feststoffen aus einem Behälter weitgehend ausfiltriert.

Eine weitere Aufgabe besteht darin, das Filterelement auch ortsgebunden zur Trennung von Restvolumina verschiedener Art einzusetzen.

Die Aufgabe wird erfindungsgemäss dadurch gelöst, dass wenigstens zwei Kammern unterschiedlicher Höhe so übereinander angeordnet sind, dass die unterste Kammer 1/3 bis 1/10 der Gesamtlänge des Kerzenfilterelementes beträgt und jeder Kammer ein Filtratableitungsrohr zugeordnet ist.

Das erfindungsgemässe Filterelement besteht somit aus einem kurzen Fussteil und einem längeren Kopfteil. Jeder Kammer des Filterelementes ist ein eigenes Filtratableitungsrohr zugeordnet. Das hat den Vorteil, dass kein Luftdurchschlag die Restvolumenfiltration unterbrechen kann.

Das erfindungsgemässe Filterelement ist besonders zur Filtration von Suspensionen mit schnell sedimentierbaren Inhaltsstoffen geeignet.

Es ist zweckmässig, die Filtrationsablaufrohre konzentrisch anzuordnen, wodurch die Herstellung der Filterelemente vereinfacht wird.

Es ist aber auch möglich und für gewisse Einsatzgebiete zweckmässig, wenn die Filtratablaufrohre nebeneinander angeordnet sind.

Es ist auch zweckmässig, dass die einzelnen Kammern fluiddicht gegeneinander abgetrennt sind.

Als Abtrennungsmittel der Kammern gegeneinander hat sich eine Platte als am besten geeignet erwiesen. Es kann aber auch jedes andere Trennmittel verwendet werden, welches eine fluiddichte Abtrennung der Kammern gewährleistet.

In einer weiteren Ausführungsform können die Kammern mit einer fluiddichten Kopfplatte und einer fluiddichten Fussplatte sowie flüssigkeitsdurchlässigen Wandungen ausgestattet sein, wobei letztere mit oder ohne Filterhilfsmitteln betreibbar sind.

Die Erfindung soll anhand einer Zeichnung erläutert werden. Es zeigen:
- Fig. 1: einen schematischen Längsschnitt durch das erfindungsgemässe Filterelement
- Fig. 2: schematisch die Funktionsweise des Filterelementes
- Fig. 3: schematisch die Funktionsweise einer Variante des Filterelementes.

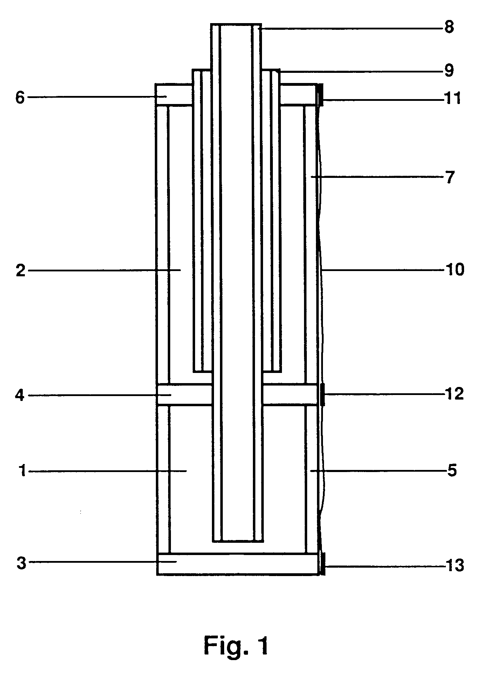

Das Filterelement gemäss Fig. 1 besteht aus einer unteren Kammer 1 und einer oberen Kammer 2. Die untere Kammer 1 wird aus einer Bodenplatte 3 und einer Trennplatte 4 gebildet, welche durch einen Stützkörper 5 voneinander getrennt sind. Die obere Kammer 2 wird in ihrem unteren Teil von der Trennplatte 4 und oben von einer Deckplatte 6 gebildet und von einem gleichartigen Stützkörper 7 getrennt. Die Trennplatte 4 trennt die Kammer 1 von der Kammer 2 fluiddicht voneinander, d.h. zwischen den Kammern 1 und 2 findet weder ein Gas- noch ein Flüssigkeitsaustausch statt. In die untere Kammer führt ein Rohr 8 ein und endet in der Nähe der Bodenplatte 3, wobei der Abstand zur Bodenplatte 3 nicht kritisch ist, in der Regel aber nur wenige Millimeter beträgt. In seinem oberen Teil führt das Rohr 8 in einen für das Filtrat nicht gezeigten Sammelraum. Ueber das Rohr 8 ist ein zweites Rohr 9 derart gestülpt, dass dessen untere Oeffnung unmittelbar vor dem Boden der Trennplatte 4 endet und lediglich einen Spalt für die Filtratabfuhr vorhanden ist. Der obere Teil des Rohres 9 kann in einen nicht gezeigten Sammelraum zusammen mit dem Filtrat von Rohr 8 oder getrennt führen. Das beschriebene Filterelement ist von einem Filtermittel 10 umgeben, welches an der Deckplatte 6 mit einem Befestigungsmittel 11, an der Trennplatte 4 mit einem Befestigungsmittel 12 und an der Bodenplatte mit einem Befestigungsmittel 13 fixiert ist. Als Befestigungsmittel sind sogenannte Schlauchschellen am besten geeignet.

Als Stützkörper für die Filtermittel können bekannte perforierte Rohre aus Kunststoff, Metall, aber auch selbsttragende Filtermittel wie Sintermetall oder Keramikrohre dienen.

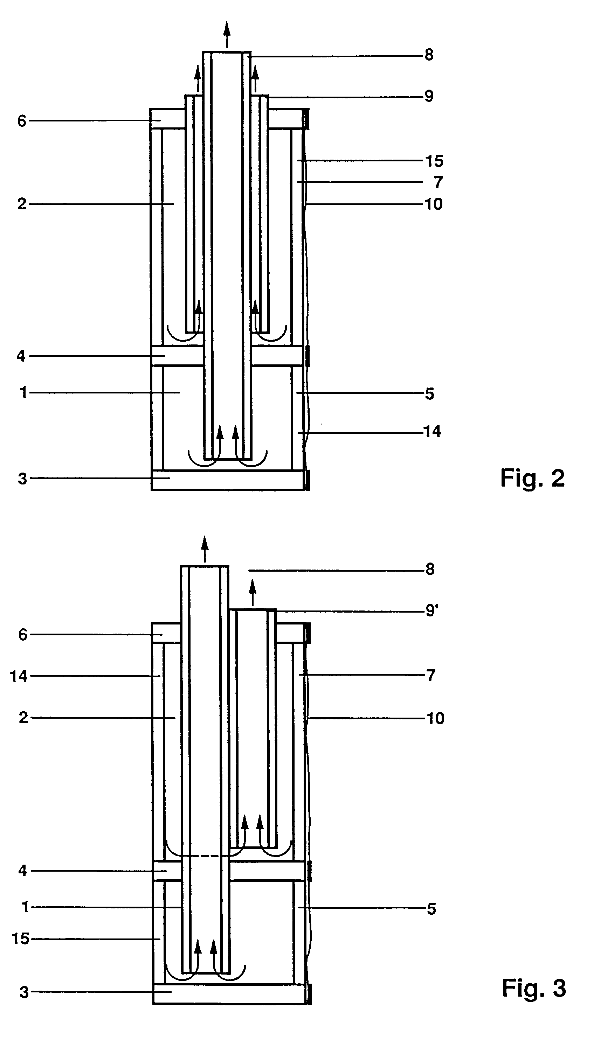

In Fig. 2 sind zwei Ausführungsformen der Kammerkerze mit Angabe des Filtratflusses angegeben. In der ersten Ausführungsform bestehen die Wände der Kammern 1 und 2 aus Stützkörpern 5 und 7 und Filtermittel 10. In der zweiten Ausführungsform bestehen die Wände der Kammern 1 und 2 aus flüssigkeitsdurchlässigem Material 14 und 15, das zugleich auch als Filtermittel wirksam ist.

In Fig. 3 kann anstelle eines, das Rohr 8 konzentrisch umgebenden Rohres, für den Filterablauf in der Kammer 2 ein Rohr 9' vorgesehen werden, welches parallel zum Rohr 8 geführt ist.

Das erfindungsgemässe Kerzenfilterelement kommt nach beendeter Hauptfiltration zum Einsatz, insbesondere um ein im Boden eines Filterbehälters verbleibendes Restvolumen zu trennen. Dabei wird das beispielsweise in seiner ganzen Höhe von einer Suspension umgebene Filterelement über die Filtratrohre 8, 9 ein Unterdruck erzeugt, wodurch zunächst fast bis zur Höhe der Trennplatte 4 der Flüssigkeitsspiegel der Suspension absinkt. Kurz bevor die Kammer 2 Luft oder vorhandenes Gas zieht, wird sie abgeschaltet, und über die untere Kammer 1 wird das noch übrig bleibende Restvolumen ausfiltriert. Die Länge des kurzen unteren Teiles des Filterelementes richtet sich nach der Handhabung des vorhandenen Filterkuchens, wobei die Kammer 1 vollständig im Feststoff eingeschlossen sein kann.

Die Abführung des Filtrates kann dem Stand der Technik entsprechend entweder mit Ueberdruck und/oder Unterdruck durch die Kerzen erfolgen. Im ersten Fall benutzt man ein Druckgefäss, wogegen im zweiten Fall in einem für drucklosen Betrieb bzw. für Unterdruck ausgelegten Behälter gearbeitet werden kann. Aber auch die Kombination von Ueber- und Unterdruck ist möglich.

In dem Fall, dass es sich um ein schnell sedimentierbares Produkt handelt, kann die Waschung desselben durch Aufrühren vorgenommen werden, wobei demzufolge das Filter mit einem Rührer ausgestattet ist, der von den Filterkerzen umgeben ist.

Diese Kammerkerzen können selbstverständlich auch beider Filtration von leicht suspendierbaren Feststoffen eingesetzt werden, wobei dann eine dem gewünschten Filterkuchenaufbau erforderliche Filterfläche vorhanden sein sollte. Auch in diesem Fall wird das sonst übliche Restvolumen verhindert.

### Beispiele

### 1. Vergleichsbeispiel

3000 l einer wässrigen Suspension, die 150 kg eines Metallpulvers mit einem spezifischen Gewicht von 2g/ccm mit einer Korngrössenverteilung von maximal 100 µm enthält, wird über ein 1,2 m² Kerzenfilter mit einem Fassungsvermögen von ca. 0,6 m³ filtriert. Dabei zeigt sich, dass aus diesem Feststoff kein vollständiger Filterkuchen an den Kerzen erzeugt werden kann. Der grösste Teil des Metallpulvers sammelt sich im Boden des Behälters unterhalb der Filterelemente an. Die Filtration ist dann beendet, wenn durch die Filterelemente Gas hindurchtritt. In diesem Moment befinden sich noch ca. 60% Restvolumen, bezogen auf das Fassungsvermögen des Filters inklusiv Feststoff im Filter. Dieses Restvolumen ist nicht mehr abtrennbar.

### 2. Anwendungsbeispiel

3000 l einer wässrigen Suspension, die 150 kg des Metallpulvers mit einem spez. Gewicht von 2g/ccm und einer Korngrössenverteilung von maximal 100 µm enthält, wird über das erfindungsgemässe Filter mit 3 Filterkerzen mit 0,63 m² Gesamtfläche und einem Nettofassungsvermögen von 0,6 m³ filtriert. Von der Gesamtfläche sind 0,21 m² zur Restvolumenfiltration vorgesehen.

| Daten für eine Kammerfilterkerze: | |
|---|---|
| obere Filterfläche | 0, 14 m² |
| untere Filterfläche | 0, 07 m² |
| | 0̅,̅ 2̅1̅ m̅²̅ |
| Gesamtkerzenlänge | 900 mm |
| obere Kerzenhöhe | 600 mm |
| untere Kerzenhöhe | 300 mm |
| ⌀ der Kerze | 80 mm |
| Filtertuch | 30 µm |

Dabei sammelt sich, wie im Vergleichsbeispiel, der grösste Teil des Metallpulvers auf dem Boden des Behälters und schliesst zunehmend die unteren Kerzen ein. Während der Filtration wird die Kerze sowohl über den oberen als auch über den unteren Teil zur Filtratableitung betrieben. Nach Durchbruch des Gases durch die obere Kammer des Filterelementes wird die Kammer abgeschaltet und das Produkt als Filterkuchen abgeworfen. Die untere Kammer übernimmt jetzt die gesamte Restvolumenfiltration. Man erhält einen Filterkuchen, der nahezu trocken gesaugt ist. Der Grad der Restvolumenfiltration kann beliebig eingestellt werden. Das Filterelement ist im Bereich der unteren Kammer vom Produkt vollständig eingeschlossen.

Eine besondere Anwendung findet das erfindungsgemässe Filtrationsverfahren bei Suspensionen mit sehr schnell sedimentierenden Inhaltsstoffen. Es handelt sich hierbei um Stoffe, deren spezifisches Gewicht deutlich von dem des Filtrats abweicht. In diesem Fall lässt man einen Teil des Feststoffes absitzen, bevor die Filtration beginnt. Am Ende der Filtration wird damit der grösste Teil des Feststoffes ausserhalb des oberen Kerzenteils auf dem Boden des Filters liegen und das kurze Kerzenteil vollständig umhüllen.

## Patentansprüche

1. Kerzenfilterelement zur Filtration eines Restvolumens von Suspensionen mit rasch sedimentierenden Feststoffen und zum Einbau in einen Behälter, dadurch gekennzeichnet, dass wenigstens zwei Kammern (1, 2) unterschiedlicher Höhe so übereinander angeordnet sind, dass die unterste Kammer (1) 1/3 bis 1/10 der Gesamtlänge des Kerzenfilterelementes beträgt und jeder Kammer (1, 2) ein Filtratableitungsrohr (8, 9) zugeordnet ist.

2. Kerzenfilterelement nach Anspruch 1, dadurch gekennzeichnet, dass die Filtratableitungsrohre (8, 9) konzentrisch angeordnet sind.

3. Kerzenfilterelement nach dem Anspruch 1, dadurch gekennzeichnet, dass die Filtratableitungsrohre (8, 9) nebeneinander angeordnet sind.

4. Kerzenfilterelement nach Anspruch 1, dadurch gekennzeichnet, dass die einzelnen Kammern (1, 2) mittels eines Trennkörpers (4) fluiddicht gegeneinander abgetrennt sind.

5. Kerzenfilterelement nach Anspruch 4, dadurch gekennzeichnet, dass der Trennkörper (4) eine Platte ist.

6. Kerzenfilterelement nach den Ansprüchen 1 bis 5, dadurch gekennzeichnet, dass die Kammern (1, 2) mit einer fluiddichten Deckplatte (6) und einer fluiddichten Bodenplatte (3), sowie flüssigkeitsdurchlässigen Wandungen (14, 15) ausgestattet sind, wobei letztere mit oder ohne Filterhilfsmittel (10) versehen sind.

## Claims

1. A filtering candle element for the filtration of a residual volume of suspensions with rapidly sedimenting solids and for incorporation into a container, characterised in that at least two chambers (1, 2) of different height are arranged one above the other 50 that the lowest chamber (1) amounts to 1/3 to 1/10 of the total length of the filtering candle element and a filtrate outlet pipe (8, 9) is associated with each chamber (1, 2).

2. A filtering candle element according to Claim 1, characterised in that the filtrate outlet pipes (8, 9) are arranged concentrically.

3. A filtering candle element according to Claim 1, characterised in that the filtrate outlet pipes (8, 9) are arranged adjacent to each other.

4. A filtering candle element according to Claim 1, characterised in that the individual chambers (1, 2) are separated so as to be fluid-tight with respect to each other by means of a separating body (4).

5. A filtering candle element according to Claim 4, characterised in that the separating body (4) is a plate.

6. A filtering candle element according to Claims 1 to 5, characterised in that the chambers (1, 2) are equipped with a fluid-tight cover plate (6) and a fluid-tight base plate (3), and also walls (14, 15) permeable to fluid, in which the latter are provided with or without filtering aids (10).

## Revendications

1. Elément filtrant à bougies pour la filtration d'un volume résiduel de suspensions contenant des substances solides à sédimentation rapide, et destiné à être monté dans un récipient, caractérisé en ce qu'il est prévu au moins deux chambres (1, 2) de hauteurs différentes qui sont superposées de telle sorte que la chambre inférieure (1) représente 1/3 à 1/10 de la longueur totale de l'élément filtrant à bougies et qu'un tuyau d'écoulement de filtrat (8, 9) soit associé à chaque chambre (1, 2).

2. Elément filtrant à bougies selon la revendication 1, caractérisé en ce que les tuyaux d'écoulement de filtrat (8, 9) sont disposés de façon concentrique.

3. Elément filtrant à bougies selon la revendication 1, caractérisé en ce que les tuyaux d'écoulement de filtrat (8, 9) sont juxtaposés.

4. Elément filtrant à bougies selon la revendication 1, caractérisé en ce que les chambres individuelles (1, 2) sont séparées l'une de l'autre de façon étanche au fluide à l'aide d'un organe de séparation (4).

5. Elément filtrant à bougies selon la revendication 4, caractérisé en ce que l'organe de séparation (4) est une plaque.

6. Elément filtrant à bougies selon les revendications 1 à 5, caractérisé en ce que les chambres (1, 2) sont équipées d'une plaque de recouvrement (6) étanche au fluide et d'une plaque de fond (3) étanche au fluide, ainsi que de parois (14, 15) perméables au liquide, ces dernières étant prévues avec ou sans moyens filtrants auxiliaires (10).
